# EUROPEAN PATENT SPECIFICATION

(11) **EP 1 380 153 B1**
(45) Date of publication and mention of the grant of the patent: **02.09.2009**
(21) Application number: 02707012.7
(22) Date of filing: 03.04.2002
(51) Int. Cl.: H04M 3/493

(54) **VOICE RESPONSE SYSTEM**
SPRACHANTWORTSYSTEM
SYSTEME DE REPONSE VOCALE

(30) Priority: 19.04.2001 EP 01303597
(43) Date of publication of application: 14.01.2004
(73) Proprietor: BRITISH TELECOMMUNICATIONS public limited company, London EC1A 7AJ (GB)
(72) Inventor: POPAY, Paul, Ian, Ipswich, Suffolk IP4 4AG (GB); HARRISON, Michael, Andrew, Stonham Parva, Suffolk IP14 5JT (GB); WATTON, Neil, Lewis, Ipswich, Suffolk IP2 8AH (GB)
(74) Representative: Nash, Roger William
(86) International application number: PCT/GB2002/001550
(87) International publication number: WO 2002/087201

(56) References cited:
- EP-A- 0 973 314
- EP-A- 0 992 980
- WO-A-00/65814
- WO-A-00/78022
- WHITTAKER S J ET AL: "INTERACTIVE SPEECH SYSTEMS FOR TELECOMMUNICATIONS APPLICATIONS" BT TECHNOLOGY JOURNAL, BT LABORATORIES, GB, vol. 14, no. 2, 1 April 1996 (1996-04-01), pages 11-23, XP000584907 ISSN: 1358-3948
- ATTWATER D J ET AL: "ISSUES IN LARGE-VOCABULARY INTERACTIVE SPEECH SYSTEMS" BT TECHNOLOGY JOURNAL, BT LABORATORIES, GB, vol. 14, no. 1, 1996, pages 177-186, XP000554647 ISSN: 1358-3948
- PAWLEWSKI M ET AL: "ADVANCES IN TELEPHONY-BASED SPEECH RECOGNITION" BT TECHNOLOGY JOURNAL, BT LABORATORIES, GB, vol. 14, no. 1, 1996, pages 127-149, XP000554644 ISSN: 1358-3948
- ATTWATER D J ET AL: "LARGE-VOCABULARY DATA-CENTRIC DIALOGUES" BT TECHNOLOGY JOURNAL, BT LABORATORIES, GB, vol. 17, no. 1, January 1999 (1999-01), pages 149-159, XP000824588 ISSN: 1358-3948
- POWER K J: "THE LISTENING TELEPHONE - AUTOMATING SPEECH RECOGNITION OVER THE PSTN" BT TECHNOLOGY JOURNAL, BT LABORATORIES, GB, vol. 14, no. 1, 1996, pages 112-126, XP000554643 ISSN: 1358-3948

## Description

### Technical Field

This invention relates to a voice response apparatus and method, particularly although not exclusively for accessing and updating remotely held data using a telephone.

### Background to the Invention and Prior Art

In known voice response systems a user's input speech is compared to audio representations of speech units (which may be words or sub words) to determine what the user has said. Usually a representation of sequences of speech units which are expected to be spoken are stored in a grammar also sometimes known as a language model. Often voice response systems will adapt the speech units for each individual user so that the speech units provide a better model for each user's speech as the system is used. Thus the more a user uses the system the better the system is able to recognise that individual's speech.

However, a problem with such a system is that the grammar model does not adapt. For example, in a diary access system one user may always say 'view my calendar' whereas another may always say 'go to my appointments'.

WO 00 78022 describes a method of developing an interactive voice response system having a grammar store 24 where the grammar is updated continuously by a grammatical inference engine 46. Whittaker S J et al: 'Interactive speech systems for telecommunications applications', BT technology Journal, BT Laboratories, GB, vol. 14,, no.2, 1 April 1996 (1996-04-01), pages 11-23, XP000584907 ISSN: 1358-3948 discloses an interactive speech system having a vocabulary store and a speech recogniser. In this document is stated that the vocabulary needs to be updated once an application has been running for a while. Attwater D J et al 'Issues in large-vocabulary interactive speech systems' BT Technology Journal BT Laboratories, GB, vol.14, no.1, January 1996, pages 177 -186, XP000554647 ISSN: 1358-3948. This paper briefly discusses dynamic vocabulary modification and that using for example dynamic a priori probability modification or dynamic vocabulary generation can generate this. WO0065814 describes an object-orientated framework for interactive response applications. For each speech object, which is prompts and grammars associated with a corresponding type of dialog interaction, grammar can be updated dynamically, at runtime.

EP 992 980 describes a Web-based platform for interactive voice response. The IVR platform includes a speech synthesiser, a grammar generator and a speech recogniser. The grammar generator utilises textual information parsed from a retrieved web page to produce a grammar, thus the grammar is dynamically generated.

A voice response system that adapts itself to a caller pattern of prompt selection is known from EP 973 314. By monitoring incoming calls to determine what prompts are most frequently selected, the IVR system can tailor the presentation order of the prompts to the needs of individual users.

### Summary of the Invention

According to a first aspect of the present invention there is provided a voice response apparatus comprising
a store for storing user grammar data;
a speech recogniser for recognising an utterance in dependence upon stored user grammar data and for generating a word or sequence of words to which the utterance is determined to be most similar; and
a grammar updater for updating grammar data characterised by the store storing grammar data for each particular and the grammar updater updating said individual grammar data in dependence upon words generated by the speech recogniser for utterances received from said particular user.

A problem with such a system is that if a user starts to use words which have been effectively removed from a grammar because the user did not use those words previously the apparatus will not work effectively. Therefore preferably the apparatus further comprises
a store for storing user speech data corresponding to a particular user;
a store for storing generic grammar data;
a speech recogniser for recognising an utterance in dependence upon stored generic grammar data and for generating a word or sequence of words to which the utterance is determined to be most similar; and
a grammar data checker for updating user grammar data corresponding to a user in dependence upon words generated by the speech recogniser for utterances received from said user.

According to another aspect of the invention there is provided a method of operating a voice response apparatus comprising
receiving an utterance form a user; characterised by the further steps of:
recognising the utterance in dependence upon user grammar data corresponding to said particular user;
generating a word or sequence of words to which the utterance is determined to be most similar;
updating the user grammar data for said particular user in dependence upon said generated sequence.

Similarly to the apparatus case, a problem with such a method is that if a user starts to use words which have been effectively removed from a grammar because the user did not use those words previously the method will not work effectively. Therefore preferably the method further comprises
recognising the utterance in dependence upon generic grammar data;
generating a word or sequence of words to which the utterance is determined to be most similar;
updating the user grammar data in dependence upon said generated sequence.

### Brief Description of the Drawings

An embodiment of the present invention will now be described, presented by way of example only, with reference to the accompanying drawings in which:
Figure 1 is a schematic representation of a computer loaded with software embodying the present invention;
Figure 2 shows an architecture of a natural language system embodying the present invention;

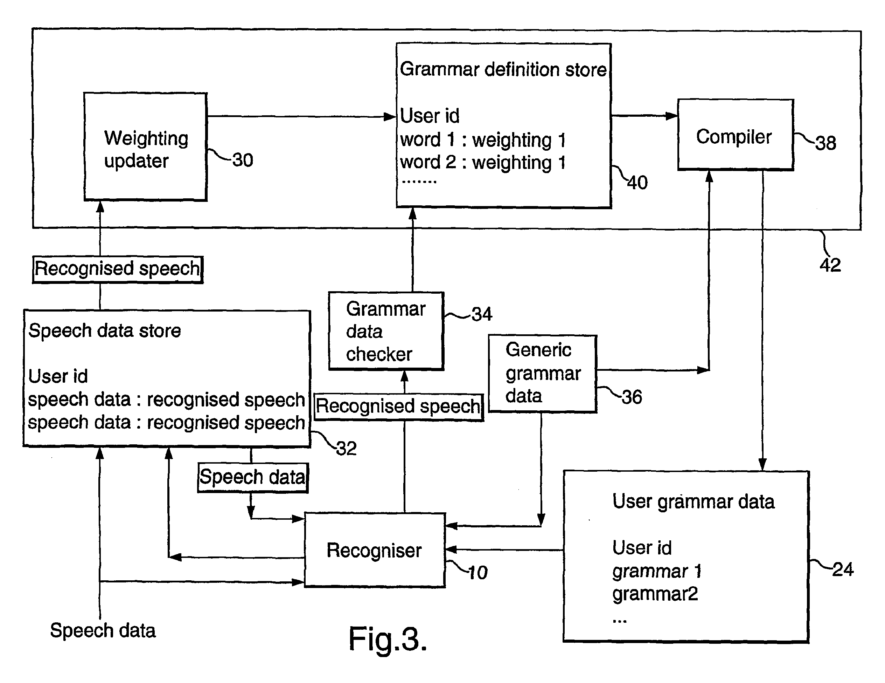

Figure 3 illustrates a grammar data updater according to the present invention; and
Figure 4 illustrates part of the user dialogue data store of Figure 1.

### Description of the Preferred Embodiment

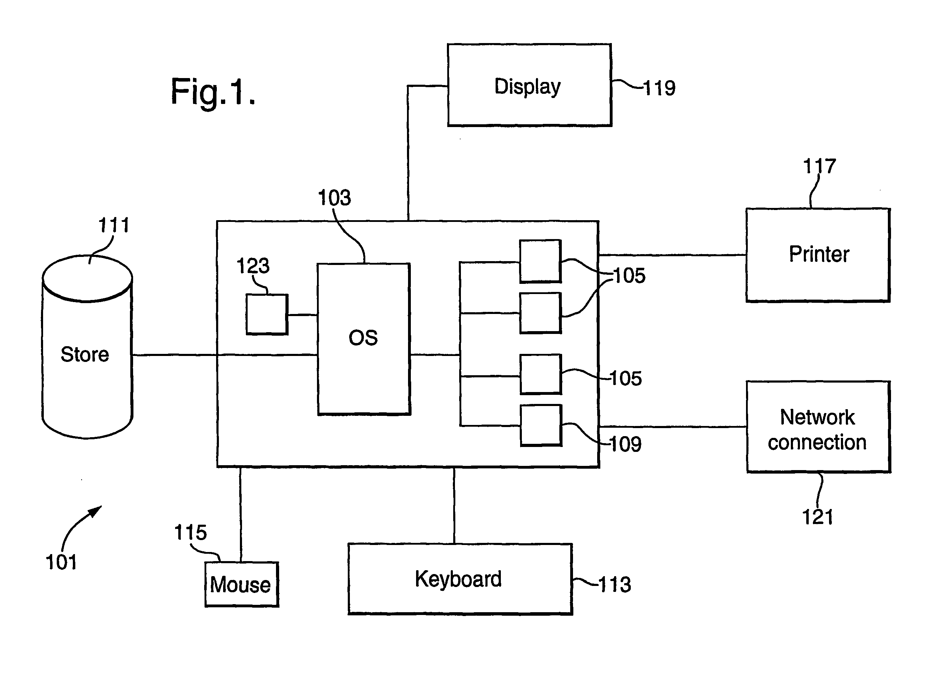

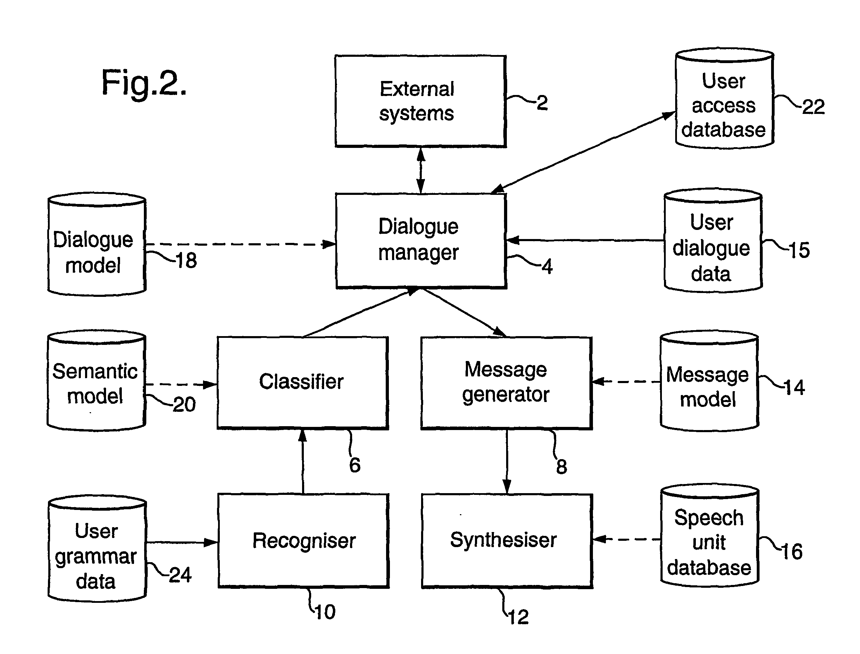

Figure 1 illustrates a conventional computer 101, such as a Personal Computer, generally referred to as a PC, running a conventional operating system 103, such as Windows (a Registered Trade Mark of Microsoft Corporation), having a store 123 and having a number of resident application programs 105 such as an e-mail program, a text to speech synthesiser, a speech recogniser, a telephone interface program or a database management program. The computer 101 also has a program 109 which together with data stored in the store 123, and resident application programs provides an interactive voice response system as described below with reference to Figure 2.

The computer 101 is connected to a conventional disc storage unit 111 for storing data and programs, a keyboard 113 and mouse 115 for allowing user input and a printer 117 and display unit 119 for providing output from the computer 101. The computer 101 also has access to external networks (not shown) via a network connection card 121.

Figure 2 shows an architecture of an embodiment of the interactive voice response system according to this invention. A user's speech utterance is received by a speech recogniser 10. The received speech utterance is analysed by the recogniser 10 with reference to a user grammar data store 24. The user grammar data store 24 represents sequences of words or sub-words which can be recognised by the recogniser 10 and the probability of these sequences occurring. The recogniser 10 analyses the received speech utterance, with reference to speech units which are held in a speech unit database 16, and provides as an output a representation of sequences of words or sub-words which most closely resemble the received speech utterance. In this embodiment of the invention the representation comprises the most likely sequence of words or sub-words, in other embodiments the representation could be a graph of the mostly likely sequences.

Recognition results are expected to be error prone, and certain words or phrases will be much more important to the meaning of the input utterance that others. Thus, confidence values associated with each word in the output representation are also provided. The confidence values give a measure related to the likelihood that the associated word has been correctly recognised by the recogniser 10. The output graph including the confidence measures are received by a classifier 6, which classifies the received graph according to a predefined set of meanings, with reference to a semantic model 20 (which is one of a plurality (not shown) of possible semantic models) to form a semantic classification. The semantic classification comprises a vector of likelihoods, each likelihood relating to a particular one of the predefined set of meanings. A dialogue manager 4 operates using a state based dialogue model 18 as will be described more fully later. The dialogue manager 4 uses the semantic classification vector and information about the current dialogue state together with information from the dialogue model 18 and user dialogue data 15 to instruct a message generator 8 to generate a message, which is spoken to the user via a speech synthesiser 12. The message generator 8 uses information from a message model 14 to construct appropriate messages. The speech synthesiser uses a speech unit database 16 which contains speech units representing a particular voice. The dialogue manager 4 also instructs the recogniser 10 which user grammar to use from the user grammar data store 24 for recognising a received response to the generated message, and also instructs the classifier 6 as to the semantic model to use for classification of the received response. The dialogue manager 4 interfaces to other systems 2 (for example, a customer records database).

When a user calls the system the user is asked for a unique user identifier and a personal identification number. If the data entered by the user (which may be spoken or entered using a telephone keypad) matches an entry in a user access database 22. then they are allowed access to the service.

The dialogue model 18 comprises a plurality of states connected together by interconnecting edges. A caller moves to a particular state by speaking a one of several words or phases which are classified by the classifier 6 as having a particular meaning. To use the example above, 'view my calendar' and 'go to my appointments' may be classified as meaning the same thing as far as the dialogue is concerned, and may take the user to a particular dairy access state.

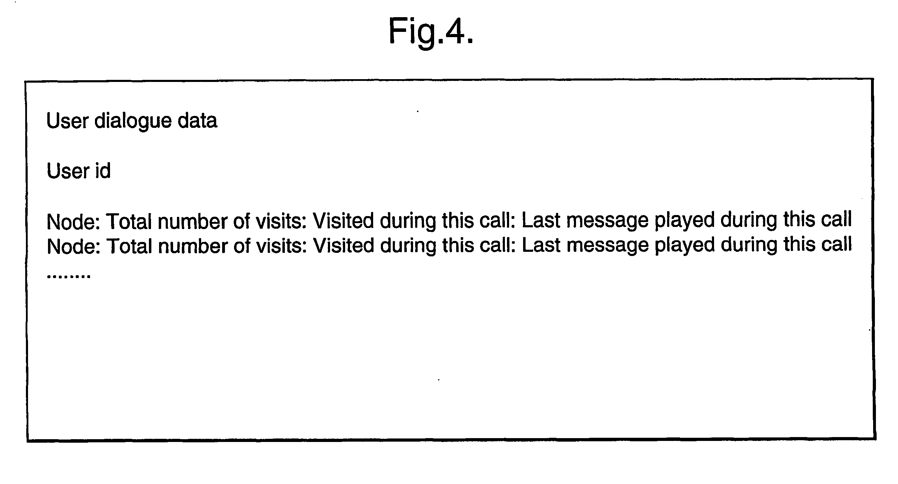

The user dialogue data store 15 stores a count of the number of times a user has visited a particular state in the dialogue model. Figure 4 shows schematically the contents of the user dialogue data store 15.

Once a user is in a particular state the dialogue manager instructs the message generator to play a message to the caller to guide them as to the actions they may perform. The verbosity of the message depends upon the count of the number of times the user had previously visited that state, which is stored in the user dialogue data store 15. When a new user calls the system, the message used will be verbose as the count will be equal to 0. The messages become more concise as the stored count for that state increases i.e. each time an individual user uses the state, whether or not the use of the state is during a single call or whether the use is during a later call to the system. The count values stored in the store 15 may be updated periodically to reduce the value if a particular user has not used a particular state recently, therefore the messages will become more verbose over time should a user not enter that state in subsequent calls, or if a user has not used the system for some time.

The user dialogue data store 1 5 also stores a Boolean flag indicating whether or not a user has visited a particular state in the dialogue model within a particular call, together with a record of the message which was played to the user the last time that state was visited. When the user visits the same state on more than one occasion during a particular call, messages will be selected by the dialogue manager 4 to ensure a different message is played to that played last time the state was visited during the call. This avoids the repetition that human factors analysis shows detrimentally affects the likelihood of a user reusing the system. For any sate with potential repetition, there are a plurality of messages stored in the message model store 14, with the next message to be used randomly selected from the set not including the message used previously (which is stored in the user dialogue data store 15).

In order to tailor the system to a particular user so that the system becomes easier to use as the system is used more, each time a user calls the system data is stored in a speech data store 32. Speech data received from the user is recognised by the recogniser 10 with reference to the user grammar data store 24. Initially before any calls have been made by a user the user grammar data is identical to generic grammar data stored in a generic grammar data store 36.

The speech data store 32 stores for each user speech data along with the sequences of words or sub-words which were recognised by the recogniser 10. After each call the recognised speech is used by a weighting updater 30 to update weighting values for words which have been recognised in a grammar definition store 40. For the particular user who made the call the words which have been recognised have a weighting value increased. In other embodiments of the invention words which have not been used also have their weighting value decreased. Once a day a compiler 38 is used to update the user grammar data store 42 according to the weighting values stored in the grammar definition store 40. A method of updating a grammar for a speech recogniser according to provided weighting values is described in our copending patent application no EP96904973.3. Together the weighting updater 30, the grammar definition store 40 and the compiler 38 provide the grammar updater 42 of the present invention.

Recognised speech does not need to be stored in a speech data store, in other embodiments of the invention recognised speech may be used to update user grammar data in a single process which may be carried out immediately. Furthermore it will be understood that the updating process could take at predetermined time intervals as described above, or could conveniently be done whenever there is spare processing power available, for example when there are no calls in progress.

The result of the use of the compiler 38 is that words or phrases which a particular user uses more frequently are given a higher weighting in the user grammar data store 24 than those which are hardly ever used. It is possible in fact to effectively delete words from a particular user grammar by providing a weighting value of O. Of course, it may happen that a user starts to use words which have not been used previously. The recogniser 10 may not recognise these words due to the fact that these words have a very low weighting value associated with them for that user in the user grammar data store 42. In order to preverit this problem the users speech which has been stored in the speech data store 32 is periodically recognised by the speech recogniser 10 using generic grammar data 36, and the recognised speech is sent to a grammar data checker 34 which checks that no words have been recognised which have been previously been given a very low weighting. If this is the case then the weighting value for that word will be updated accordingly, and the compiler 38 is used to update the user grammar data store 42 according to the updated weighting values stored in the grammar definition store 40.

Whilst this invention has been described with reference to stores 32, 40, 42 which store data for each user it will be understood that this data could be organised in any number of ways, for example there could be a separate store for each user, or store 42 could be organised as a separate store for each grammar for each user.

As will be understood by those skilled in the art, the interactive voice response program 109 can be contained on various transmission and/or storage mediums such as a floppy disc, CD-ROM, or magnetic tape so that the program can be loaded onto one or more general purpose computers or could be downloaded over a computer network using a suitable transmission medium.

Unless the context clearly requires otherwise, throughout the description and the claims, the words "comprise", "comprising" and the like are to be construed in an inclusive as opposed to an exclusive or exhaustive sense; that is to say, in the sense of "including, but not limited to".

## Claims

1. A voice response apparatus comprising
a store (24) for storing user grammar data;
a speech recogniser (10) for recognising an utterance in dependence upon stored user grammar data and for generating a word or sequence of words to which the utterance is determined to be most similar; and
a grammar updater (42) for updating grammar data ***characterised by*** the store (24) storing grammar data for each particular user and the grammar updater (42) updating said individual grammar data in dependence upon words generated by the speech recogniser for utterances received from said particular user.

2. An apparatus according to claim 1 further comprising
a store (32) for storing user speech data corresponding to a particular user;
a store (36)for storing generic grammar data;
a speech recogniser (10) for recognising an utterance in dependence upon stored generic grammar data and for generating a word or sequence of words to which the utterance is determined to be most similar; and
a grammar data checker (34) for updating user grammar data corresponding to a user in dependence upon words generated by the speech recogniser for utterances received from said user.

3. A method of operating a voice response apparatus comprising
receiving an utterance from a particular user; ***characterised by*** the further steps of:
recognising the utterance in dependence upon user grammar data corresponding to said particular user;
generating a word or sequence of words to which the utterance is determined to be most similar;
updating the user grammar data for said particular user in dependence upon said generated sequence.

4. A method according to claim 3, and further comprising the steps of
recognising the utterance in dependence upon generic grammar data;
generating a word or sequence of words to which the utterance is determined to be most similar;
updating the user grammar data in dependence upon said generated sequence.

## Patentansprüche

1. Sprachantwortvorrichtung mit
einem Speicher (24) zum Speichern von Benutzergrammatikdaten;
einer Spracherkennungsvorrichtung (10) zum Erkennen einer Äußerung in Abhängigkeit von gespeicherten Benutzergrammatikdaten und zum Erzeugen eines Wortes oder einer Abfolge von Worten, dem oder der, wie bestimmt wird, die Äußerung am ähnlichsten ist; und
einer Grammatikaktualisierungsvorrichtung (42) zum Aktualisieren von Grammatikdaten, **dadurch gekennzeichnet, dass**
der Speicher (24) Grammatikdaten für jeden bestimmten Benutzer speichert und die Grammatikaktualisierungsvorrichtung (42) die individuellen Grammatikdaten in Abhängigkeit von Worten aktualisiert, die von der Spracherkennungsvorrichtung für Äußerungen, die von dem bestimmten Benutzer empfangen werden, erzeugt werden.

2. Vorrichtung nach Anspruch 1, weiterhin mit
einem Speicher (32) zum Speichern von Benutzersprachdaten, die einem bestimmten Benutzer entsprechen;
einem Speicher (36) zum Speichern generischer Grammatikdaten;
einer Spracherkennungsvorrichtung (10) zum Erkennen einer Äußerung in Abhängigkeit von gespeicherten generischen Grammatikdaten und zum Erzeugen eines Wortes oder einer Abfolge von Worten, dem oder der, wie bestimmt wird, die Äußerung am ähnlichsten ist; und
einer Grammatikdaten-Überprüfungsvorrichtung (34) zum Aktualisieren von Benutzergrammatikdaten, die einem Benutzer entsprechen, in Abhängigkeit von Worten, die von der Spracherkennungsvorrichtung für von dem Benutzer empfangene Äußerungen erzeugt werden.

3. Verfahren zur Betätigung einer Sprachantwortvorrichtung, mit
Empfangen einer Äußerung von einem bestimmten Benutzer; **gekennzeichnet durch** die folgenden Schritte:
Erkennen der Äußerung in Abhängigkeit von Benutzergrammatikdaten, die einem bestimmten Benutzer entsprechen;
Erzeugen eines Wortes oder einer Abfolge von Worten, dem oder der, wie bestimmt wird, die Äußerung am ähnlichsten ist;
Aktualisieren der Benutzergrammatikdaten für den bestimmten Benutzer in Abhängigkeit von der erzeugten Abfolge.

4. Verfahren nach Anspruch 3, und weiterhin mit den folgenden Schritten
Erkennen der Äußerung in Abhängigkeit von generischen Grammatikdaten;
Erzeugen eines Worts oder eine Abfolge von Worten, dem oder der, wie bestimmt wird, die Äußerung am ähnlichsten ist;
Aktualisieren der Benutzergrammatikdaten in Abhängigkeit von der erzeugten Abfolge.

## Revendications

1. Dispositif à réponse vocale comprenant :
une mémoire (24) qui stocke des données grammaticales pour un utilisateur ;
un moyen de reconnaissance de la parole (10) pour reconnaître un énoncé en fonction de données grammaticales d'un utilisateur stockées et pour générer un mot ou une séquence de mots auquel ou à laquelle l'énoncé est déterminé comme étant le plus similaire; et
un moyen de mise à jour de grammaire (42) pour la mise à jour des données grammaticales, **caractérisé par le fait que** :
la mémoire (24) stocke des données grammaticales pour chaque utilisateur particulier et les moyens de mise à jour de grammaire (42) mettent à jour lesdites données grammaticales individuelles en fonction des mots générés par le moyen de reconnaissance de la parole pour les énoncés reçus dudit utilisateur particulier.

2. Dispositif selon la revendication 1, comprenant en outre :
une mémoire (32) pour stocker des données de parole d'utilisateur correspondant à un utilisateur particulier ;
une mémoire (36) pour stocker des données grammaticales génériques ;
un moyen de reconnaissance de la parole (10) pour reconnaître un énoncé en fonction des données grammaticales génériques stockées et pour générer un mot ou une séquence de mots auquel ou à laquelle l'énoncé est déterminé comme étant le plus similaire ; et
un vérificateur de données grammaticales (34) pour mettre à jour les données grammaticales d'utilisateur correspondant à un utilisateur en fonction des mots générés par les moyens de reconnaissance de la parole pour les énoncés reçus dudit utilisateur.

3. Procédé d'exploitation d'un dispositif à réponse vocale comprenant :
la réception d'un énoncé d'un utilisateur particulier ; **caractérisé par** les étapes supplémentaires consistant à :
reconnaître l'énoncé en fonction de données grammaticales d'utilisateur correspondant audit utilisateur particulier ;
générer un mot ou une séquence de mots auquel ou à laquelle l'énoncé est déterminé comme étant le plus similaire ;
mettre à jour les données grammaticales d'utilisateur pour ledit utilisateur particulier en fonction de ladite séquence générée.

4. Procédé selon la revendication 3, et comprenant en outre les étapes consistants à :
reconnaître l'énoncé en fonction de données grammaticales génériques ;
générer un mot ou une séquence de mots auquel ou à laquelle l'énonce est déterminé comme étant le plus similaire ;
mettre à jour les données grammaticales d'utilisateur en fonction de ladite séquence générée.
